(19) Europäisches Patentamt
European Patent Office
Office européen des brevets

(11) **EP 2 821 759 B1**

(12) **EUROPÄISCHE PATENTSCHRIFT**

(45) Veröffentlichungstag und Bekanntmachung des Hinweises auf die Patenterteilung:
**04.05.2016 Patentblatt 2016/18**

(51) Int Cl.:
*G01F 25/00* *(2006.01)*      *F02M 65/00* *(2006.01)*

(21) Anmeldenummer: **14173269.3**

(22) Anmeldetag: **20.06.2014**

(54) **Verfahren zur Bestimmung der Einspritzrate**

Method for determining the injection rate

Procédé destiné à la détermination du taux d'injection

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.06.2013 DE 102013212419**

(43) Veröffentlichungstag der Anmeldung:
**07.01.2015 Patentblatt 2015/02**

(73) Patentinhaber: **Robert Bosch GmbH
70442 Stuttgart (DE)**

(72) Erfinder:
• **Majer, Clemens
74379 Ingersheim (DE)**
• **Fischer, Thomas
70499 Stuttgart (DE)**
• **Hartung, Iris
73614 Schorndorf (DE)**

(56) Entgegenhaltungen:
**EP-A1- 0 187 941     WO-A1-2005/054676
US-A- 3 230 761**

**Beschreibung**

Stand der Technik

Die Erfindung betrifft ein Verfahren zur Bestimmung einer Einspritzrate eines Fluids, das von einem Injektor eingespritzt wird und eine Vorrichtung zur Durchführung des Verfahrens.

Im Stand der Technik sind Injektoren bekannt, mittels welchen beispielsweise Kraftstoff in einen Brennraum einer Brennkraftmaschine einspritzbar ist. Dabei ist die genaue Steuerung der Einspritzung des Kraftstoffs für den Verbrennungsprozess und die Abgasqualität von besonderer Bedeutung.

Daher ist die Bestimmung der Einspritzrate eines Injektors für die Steuerung der Einspritzung von besonderer Bedeutung. Hierzu sind Vorrichtungen geschaffen worden, bei welchen ein Injektor ein Fluid in eine Kolben-Zylindereinheit mit einem darin verlagerbaren Kolben einspritzt, wobei der Kolben mit einer Gegenkraft beaufschlagt ist, so dass die Einspritzung des Fluids eine Bewegung des Kolbens gegen die Gegenkraft bewirkt. Aus der zeitlichen Änderung der Auslenkung des Kolbens kann dann die Einspritzrate bestimmt werden. Dabei hat sich jedoch gezeigt, dass die damit bestimmte Einspritzrate fehlerbehaftet ist, weil die Einspritzung zu einer Schwingung des Kolbens führt, welche die Ergebnisse für die Einspritzrate verfälscht.

Offenbarung der Erfindung

Es ist daher die Aufgabe der vorliegenden Erfindung, ein Verfahren zur Bestimmung einer Einspritzrate eines Fluids zu schaffen, mittels welchem die Einspritzrate genauer bestimmbar ist. Auch ist es die Aufgabe, eine diesbezügliche Vorrichtung zur Durchführung des Verfahrens zu schaffen.

Die Aufgabe hinsichtlich des Verfahrens wird gelöst mit den Merkmalen von Anspruch 1.

Die Erfindung betrifft ein Verfahren zur Bestimmung einer Einspritzrate eines Fluids, das von einem Injektor eingespritzt wird, wobei das Fluid mittels des Injektors in eine Kolben-Zylindereinheit mit einem darin verlagerbar angeordneten Kolben eingespritzt wird und die Einspritzrate aufgrund der Bewegung des Kolbens in der Kolben-Zylinder-Einheit bestimmt wird, wobei eine Korrektur der Einspritzrate auf Basis einer detektierten Schwingung des Kolbens durchgeführt wird. Die Schwingung wird analysiert und die Bewegung des Kolbens wird um die Bewegungsdaten der Schwingung korrigiert, weil diese Schwingungsdaten auf die das Ergebnis verfälschende Schwingung zurückzuführen sind.

Dabei wird vorteilhaft die Korrektur der Schwingung des Kolbens auf Basis eines mathematischen Modells durchgeführt. Das mathematische Modell für die Schwingung des Kolbens wird auf die Bewegungsdaten angewendet, so dass daraus die reinen Bewegungsdaten der Schwingung von einer residuellen Bewegung des Kolbens unterschieden werden können. Dadurch kann eine Trennung der Schwingung des Kolbens von der residuellen Bewegung des Kolbens vorgenommen werden, so dass diese Daten unabhängig voneinander ausgewertet werden können.

Dabei ist es besonders vorteilhaft, wenn das mathematische Modell eine gedämpfte Schwingung mit zumindest einer gedämpften Schwingungsfrequenz berücksichtigt. Dabei können die Bewegungsdaten des Kolbens beispielsweise einer Fourier-Analyse unterzogen werden, um signifikante Schwingungsfrequenzen der Schwingung des Kolbens zu ermitteln, um diese bei der Korrektur mittels des mathematischen Modells zu berücksichtigen. Auch ist die Auswahl von Schwingungsfrequenzen und/oder Dämpfungscharakteristiken der gedämpften Schwingung durch Erfahrungswerte möglich.

So ist es vorteilhaft, wenn zur Bestimmung der Einspritzrate aus den korrigierten Bewegungsdaten des Kolbens das Einspritzvolumen bestimmbar ist, wobei die Einspritzrate gleich der zeitlichen Ableitung des Einspritzvolumens ist. Damit kann in einem einfachen Verfahren bei Bestimmung der Einspritzrate auch das Einspritzvolumen bestimmt werden, ohne auf einen eingeschwungenen Zustand des Kolbens nach längerer Zeit warten zu müssen.

Besonders vorteilhaft ist es, wenn auf Basis der Bestimmung der Einspritzrate das Einspritzvolumen V bestimmbar ist, wobei die Einspritzrate gleich der zeitlichen Ableitung des Einspritzvolumens ist:

$$V(t) = h(t) * A_{Kolben}$$

mit h(t) dem Hub des Kolbens als Funktion der Zeit und $A_{Kolben}$ der Querschnittsfläche des Kolbens.

Dabei ist es besonders vorteilhaft, wenn die Einspritzmasse $m(\rho,h)$ als Funktion der Dichte $\rho$ des eingespritzten Fluids und des Kolbenhubs h bestimmbar ist mit:

$$m(\rho,h) = \rho(T,p) * h * A_{Kolben}$$

mit T der Temperatur und p dem Druck in der Kolben-Zylindereinheit, h dem Hub des Kolbens und $A_{Kolben}$ der Querschnittsfläche des Kolbens, zum Beispiel für die Kalibrierung des Verfahrens durch den Vergleich mit einer Waage als rückführbares Normal.

So ist es vorteilhaft, wenn die Bewegung des Kolbens in eine Schwingungsbewegung und in eine residuelle Bewegung aufgeteilt wird, wobei die Schwingungsbewegung mittels des mathematischen Modells beschrieben wird und die berechneten Bewegungsdaten aufgrund der Schwingungsbewegung von den Bewegungsdaten der Bewegung des Kolbens subtrahiert werden, um die Bewegungsdaten der residuellen Bewegung zu bestimmen. Daraus kann insbesondere die Einspritzrate bestimmt werden. Dabei ist es besonders vorteilhaft, wenn die Einspritzrate als Funktion der Zeit ermittelt wird, wobei diese Ermittlung in Echtzeit durchgeführt werden kann. Besonders vorteilhaft ist die Bestimmung der Bewegungsdaten der residuellen Bewegung in Echtzeit durch die Bestimmung der Bewegungsdaten der Schwingung in Echtzeit. Dadurch kann während des Einspritzvorgangs die Einspritzrate kontinuierlich ermittelt werden.

Auch ist es vorteilhaft, wenn die Einspritzrate aus der Bewegung des Kolbens bestimmt wird und ein Einspritzratenanteil der Schwingungsbewegung und ein Einspritzratenanteil der residuellen Bewegung ermittelt und aufgeteilt wird, wobei der Einspritzratenanteil der Schwingungsbewegung mittels des mathematischen Modells beschrieben wird, wobei der Einspritzratenanteil der Schwingungsbewegung von den Einspritzratendaten der Bewegung des Kolbens subtrahiert wird. Daraus kann insbesondere die residuelle Einspritzrate bestimmt werden. Dabei ist es auch vorteilhaft, wenn die Bestimmung der residuellen Einspritzrate in Echtzeit erfolgt.

Liegen die Daten der Einspritzrate vor, beispielsweise in Echtzeit, so kann aus der Einspritzrate als Funktion der Zeit eine Bestimmung des Einspritzbeginns, des Einspritzratenmaximums und/oder des Einspritzendes durchgeführt werden.

Die Aufgabe zur Vorrichtung wird gelöst mit den Merkmalen von Anspruch 11.

Ein diesbezügliches Ausführungsbeispiel betrifft eine Vorrichtung zur Durchführung eines Verfahrens zur Bestimmung einer Einspritzrate eines Fluids gemäß den obigen Ausführungen, mit einem Injektor zur Einspritzung eines Fluids in eine Kolben-Zylindereinheit mit einem darin verlagerbar angeordneten Kolben und mit Mitteln zur Bestimmung der Einspritzrate aufgrund der Bewegung des Kolbens in der Kolben-Zylinder-Einheit, wobei die Mittel eine Korrektur der Einspritzrate auf Basis einer detektierten Schwingung des Kolbens durchführen.

Weitere Vorteile und Ausgestaltungen der Erfindung ergeben sich aus der Beschreibung und den nachfolgenden Zeichnungen.

Kurze Beschreibung der Zeichnungen

Figur 1    zeigt eine Vorrichtung zur Durchführung eines erfindungsgemäßen Verfahrens,

Figur 2    ein Diagramm einer Einspritzrate als Funktion der Zeit mit überlagerter Schwingung,

Figur 3    ein Diagramm einer Einspritzrate als Funktion der Zeit mit bereinigter Schwingung, und

Figur 4    ein Blockdiagramm zur Erläuterung des erfindungsgemäßen Verfahrens.

Ausführungsformen der Erfindung

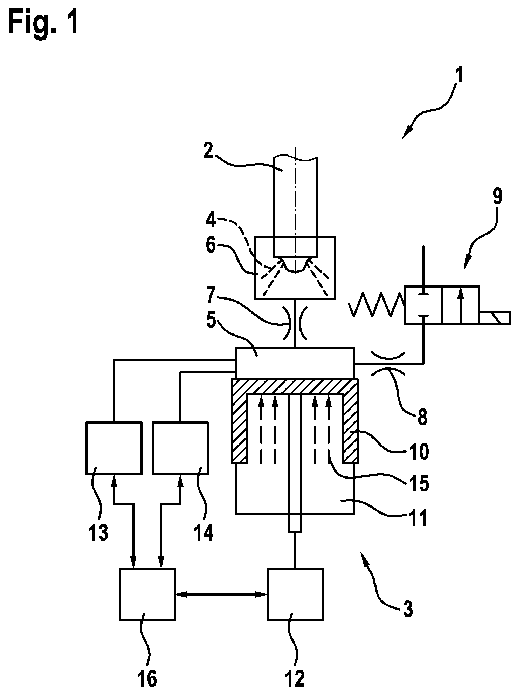

Die Figur 1 zeigt in einer schematischen Darstellung eine Vorrichtung 1 zur Durchführung eines erfindungsgemäßen Verfahrens. Dabei weist die Vorrichtung 1 einen Injektor 2 und eine Kolben-Zylindereinheit 3 auf, wobei der Injektor 2 ein Fluid 4 in einen Raum 5 der Kolben-Zylindereinheit 3 einspritzt. Dazu ist der Injektor 2 mittels eines Adapters 6 und eines Spritzdämpfers 7 mit der Kolben-Zylindereinheit 3 und mit dem Raum 5 gekoppelt.

Der Raum 5 steht über eine Drossel 8 mit einem Ventil 9 in Verbindung, um aus dem Raum 5 das Fluid 4 wieder auszulassen. Hierzu kann beispielsweise eine Pumpe angeschlossen sein, die jedoch nicht dargestellt ist. Alternativ kann mit Hilfe des Drucks unterhalb des Kolbens 10 durch einen Kolbenhub des Kolbens 10 bei geöffnetem Ventil 9 das Fluid 4 wieder aus dem Raum 5 ausgelassen werden.

Die Kolben-Zylindereinheit 3 weist einen Zylinder auf, in welchem der Kolben 10 den Zylinderinnenraum in den Raum 5 und den Raum 11 unterteilt. Durch eine gezielte Druckbeaufschlagung des Raums 11 kann die Gegenkraft 15 bei der Einspritzung des Fluids gezielt eingestellt werden. Wird in den Raum 5 ein Fluid 4 eingespritzt, bewegt sich der Kolben 10 in Figur 1 nach unten und reduziert das Volumen des Raums 11, wobei gleichzeitig das Volumen des Raums 5 vergrößert wird. Die Gegenkraft wird dabei durch eine Feder und/oder durch einen Gegendruck aufgrund einer Gasdruckbeaufschlagung erzeugt.

Zur Überwachung der Vorrichtung sind Sensoren 12, 13 und 14 vorgesehen, welche den Kolbenhub, die Temperatur und den Druck in dem Raum 5 der Kolben-Zylindereinheit 3 detektieren. Die Sensoren 12, 13 und 14 stehen dabei mit einer Steuereinheit 16 in Verbindung, welche auch die Auswertung der Bewegung des Kolbens 10 vornimmt. Die Steuereinheit 16 bestimmt aus der Bewegung des Kolbens 10 aus den Daten des Hubs h(t) des Kolbens 10 als Funktion der Zeit t multipliziert mit der Querschnittsfläche $A_{Kolben}$ des Kolbens 10 das Einspritzvolumen V(t) als Funktion der Zeit. Dabei wird der Kolbenhub h(t) aus den Sensordaten des Sensors 12 bestimmt. Dabei gilt:

$$V(t) = h(t) * A_{Kolben}.$$

Durch zeitliche Ableitung des Einspritzvolumens V(t) kann die Einspritzrate E durch die Steuereinheit 16 ermittelt werden zu:

$$E = dV(t)/dt = dh(t)/dt * A_{Kolben}.$$

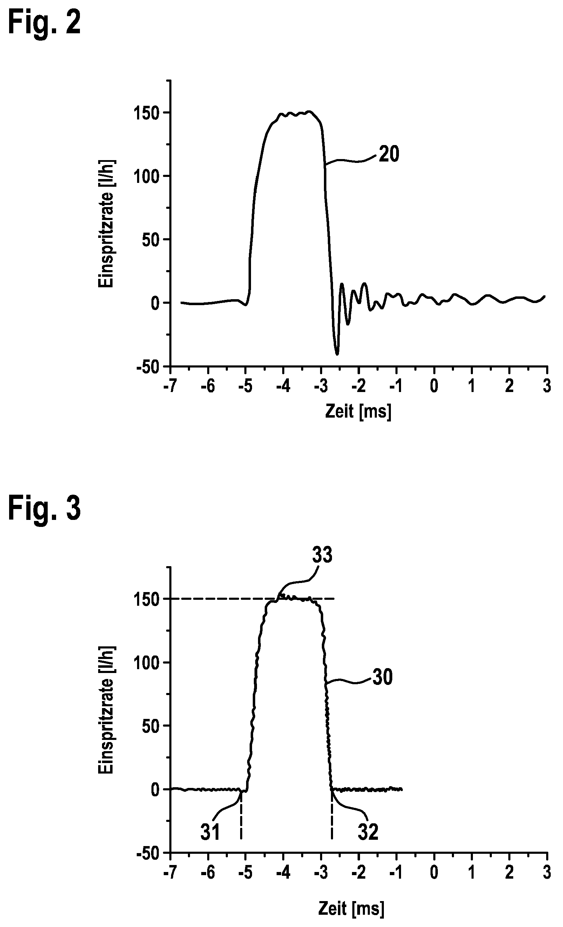

Wird ein Fluid 4, wie beispielsweise ein Kraftstoff, in den Raum 5 der Kolben-Zylindereinheit 3 eingespritzt, lenkt der Kolben aus und es wird daraus eine Einspritzrate bestimmt, deren zeitlicher Verlauf als Kurve 20 in Figur 2 dargestellt ist.

Man erkennt in Figur 2 ab etwa der Zeit t = -5ms einen steilen Anstieg, welcher gefolgt ist von einer Sättigung bei etwa 150 l/h. Diese Sättigung ist gefolgt von einem steilen Abfall ab etwa t = -3 ms. Dabei zeigt die Einspritzrate ab dem Abfall ab etwa t = -3 ms eine Schwingung, die durch das Schwingen des Kolbens hervorgerufen wird. Dadurch werden die Ermittlung der tatsächlichen Einspritzrate und deren zeitlicher Verlauf verfälscht.

Die Figur 3 zeigt einen Verlauf 30 der Einspritzrate, bei welchem im Vergleich zum Verlauf der Figur 2 der Einfluss durch die Schwingung des Kolbens bereinigt wurde. Man erkennt in Figur 3 ebenso einen Anstieg etwa ab der Zeit t = -5ms einen steilen Anstieg, welcher gefolgt ist von einer Sättigung bei etwa 150 l/h. Diese Sättigung ist wiederum gefolgt von einem steilen Abfall ab etwa t = -3 ms, wobei am Ende des Abfalls die Einspritzrate schnell wieder auf einen im Wesentlichen geraden Wert der Einspritzrate von 0 übergeht. Dadurch können der Einspritzbeginn 31, das Einspritzende 32 und/oder das Einspritzratenmaximum 33 gut bestimmt werden. Dabei kann der Einspritzbeginn als steilen Anstieg aufgrund eines Gradienten ermittelt werden, welcher größer ist als ein vorgebbarer Grenzwert für den Gradienten. Auch kann das Einspritzende als steiler Abfall aufgrund eines Gradienten ermittelt werden, welcher betragsmäßig größer ist als ein vorgebbarer Grenzwert für den Gradienten ist, wobei das Vorzeichen des Gradienten negativ ist, im Vergleich zum Gradienten bei dem Einspritzbeginn. Das Einspritzratenmaximum wird durch die Bestimmung des Maximalwerts vorgenommen, bei welchem ein Verfahren zur Maximumbestimmung von Datenwerten herangezogen werden kann.

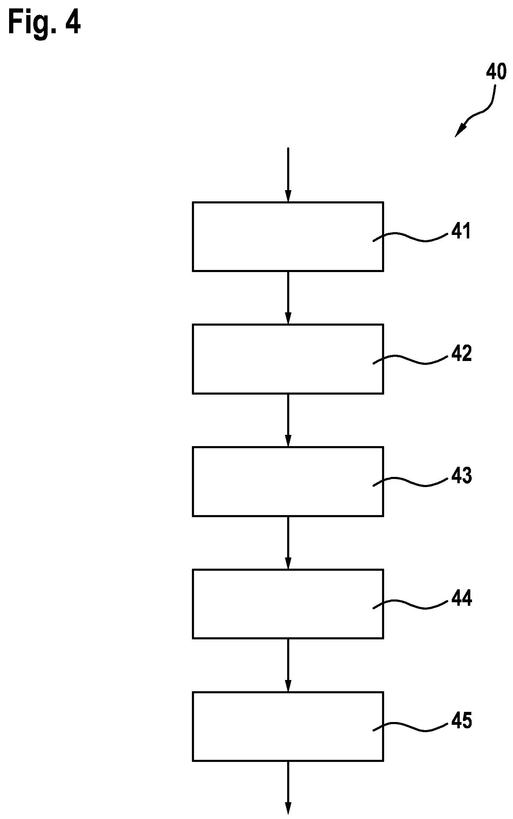

Die Figur 4 zeigt ein Blockdiagramm 40 zur Erläuterung des erfindungsgemäßen Verfahrens. In Block 41 wird das Fluid mittels des Injektors in den Raum 5 eingespritzt. Gemäß Block 42 werden die Messwerte zumindest für den Kolbenhub und/oder für die Temperatur und/oder für den Druck im Raum 5 ermittelt.

In Block 43 wird aus den Bewegungsdaten des Kolbens eine Einspritzrate bestimmt. Es wird eine Analyse der Daten der Einspritzrate vorgenommen und die Schwingung des Kolbens aufgrund der Bewegungsdaten analysiert und mittels eines mathematischen Modells beschrieben. Dabei wird als mathematisches Modell ein Schwingungsmodell des Kolbens mit zumindest einer gedämpften Schwingungsfrequenz angenommen. Dabei kann beispielsweise eine Fourier-Analyse zur Bestimmung von Eigenfrequenzen des Kolbens durchgeführt werden, um die charakteristischen Schwingungsfrequenzen einer gedämpften Schwingung zu ermitteln. Auch kann dabei auf Erfahrungswerte zurückgegriffen werden.

Anschließend wird in Block 44 der Verlauf der Einspritzrate um den Anteil bereinigt, welcher von dem Schwingungsverlauf des Kolbens resultiert, so dass die Einspritzrate basierend von dem residuellen Bewegungsverlauf des Kolbens ohne Berücksichtigung der Schwingung vorliegt.

Bei dem erfindungsgemäßen Verfahren wird bei einem Ausführungsbeispiel die Bewegung des Kolbens in eine Schwingungsbewegung und in eine residuelle Bewegung aufgeteilt. Die Schwingungsbewegung wird dabei mittels des mathematischen Modells beschrieben und es werden von den Bewegungsdaten der Bewegung des Kolbens die berechneten Bewegungsdaten aufgrund der Schwingungsbewegung subtrahiert, um die Bewegungsdaten der residuellen Bewegung zu bestimmen. Aus diesen Bewegungsdaten der residuellen Bewegung wird anschließend die Einspritzrate bestimmt.

Bei einem alternativen Verfahren wird aus den Bewegungsdaten der Bewegung des Kolbens die Einspritzrate bestimmt und es werden weiterhin ein Einspritzratenanteil der Schwingungsbewegung und ein Einspritzratenanteil der residuellen Bewegung ermittelt und aufgeteilt. Dabei wird der Einspritzratenanteil der Schwingungsbewegung mittels des mathematischen Modells beschrieben, wobei der Einspritzratenanteil der Schwingungsbewegung von den Einspritzratendaten der Bewegung des Kolbens subtrahiert werden, um den Einspritzratenanteil der residuellen Bewegung des Kolbens zu ermitteln.

Aus diesen Daten wird in Block 45 eine Auswertung des Einspritzratenverlaufs vorgenommen, wobei der Einspritzbeginn, das Einspritzende und/oder das Einspritzratenmaximum ermittelt werden.

Weiterhin ist es möglich, aus dem Kolbenhub auch das Einspritzvolumen, wie oben beschrieben, zu ermitteln. Dies wird bevorzugt durch die Steuereinheit 16 durchgeführt. Dabei kann aus dem Einspritzvolumen die Einspritzmasse m(ρ,h) als Funktion der Dichte ρ des eingespritzten Fluids und des Kolbenhubs h bestimmt werden mit:

$$m(\rho,h) = \rho(T,p) * h * A_{Kolben}$$

mit T der Temperatur und p dem Druck in der Kolben-Zylindereinheit, h dem Hub des Kolbens und $A_{Kolben}$ der Querschnittsfläche des Kolbens.

**Patentansprüche**

1. Verfahren zur Bestimmung einer Einspritzrate eines Fluids, das von einem Injektor (2) eingespritzt wird, wobei das Fluid (4) mittels des Injektors (2) in eine Kolben-Zylindereinheit (3) mit einem darin verlagerbar angeordneten Kolben (10) eingespritzt wird und die Einspritzrate aufgrund der Bewegung des Kolbens (10) in der Kolben-Zylinder-Einheit (3) bestimmt wird, wobei eine Korrektur der Einspritzrate auf Basis einer detektierten Schwingung des Kolbens (10) durchgeführt wird.

**2.** Verfahren nach Anspruch 1, **dadurch gekennzeichnet, dass** die Korrektur bezüglich der Schwingung des Kolbens (10) auf Basis eines mathematischen Modells erfolgt.

**3.** Verfahren nach Anspruch 2, **dadurch gekennzeichnet, dass** das mathematische Modell eine gedämpfte Schwingung mit zumindest einer gedämpften Schwingungsfrequenz berücksichtigt.

**4.** Verfahren nach Anspruch 1, 2 oder 3, **dadurch gekennzeichnet, dass** auf Basis der Bestimmung der Einspritzrate das Einspritzvolumen V bestimmbar ist, wobei die Einspritzrate gleich der zeitlichen Ableitung des Einspritzvolumens ist:

$$V(t) = h(t) * A_{Kolben}$$

mit h(t) dem Hub des Kolbens als Funktion der Zeit und $A_{Kolben}$ der Querschnittsfläche des Kolbens.

**5.** Verfahren nach Anspruch 4, **dadurch gekennzeichnet, dass** die Einspritzmasse m(p,h) als Funktion der Dichte ρ des eingespritzten Fluids (4) und des Kolbenhubs h bestimmbar ist mit:

$$m(\rho,h) = \rho(T,p) * h*A_{Kolben}$$

mit T der Temperatur und p dem Druck in der Kolben-Zylindereinheit (3), h dem Hub des Kolbens und $A_{Kolben}$ der Querschnittsfläche des Kolbens.

**6.** Verfahren nach einem der vorhergehenden Ansprüche, **dadurch gekennzeichnet, dass** die Bewegung des Kolbens (10) in eine Schwingungsbewegung und in eine residuelle Bewegung aufgeteilt wird, wobei die Schwingungsbewegung mittels des mathematischen Modells beschrieben wird und von den Bewegungsdaten der Bewegung des Kolbens (10) die berechneten Bewegungsdaten aufgrund der Schwingungsbewegung subtrahiert werden, um die Bewegungsdaten der residuellen Bewegung zu bestimmen.

**7.** Verfahren nach einem der vorhergehenden Ansprüche, **dadurch gekennzeichnet, dass** die Einspritzrate aus der Bewegung des Kolbens (10) bestimmt wird und ein Einspritzratenanteil der Schwingungsbewegung und ein Einspritzratenanteil der residuellen Bewegung ermittelt und aufgeteilt wird, wobei der Einspritzratenanteil der Schwingungsbewegung mittels des mathematischen Modells beschrieben wird, wobei der Einspritzratenanteil der Schwingungsbewegung von den Einspritzratendaten der Bewegung des Kolbens (10) subtrahiert wird.

**8.** Verfahren nach Anspruch 6 oder 7, **dadurch gekennzeichnet, dass** aus den Bewegungsdaten der residuellen Bewegung oder aus dem Einspritzratenanteil der residuellen Bewegung die Einspritzrate bestimmt wird.

**9.** Verfahren nach einem der vorhergehenden Ansprüche 6, 7 oder 8, **dadurch gekennzeichnet, dass** die Bestimmung der Bewegungsdaten der residuellen Bewegung oder des Einspritzratenanteils der residuellen Bewegung in Echtzeit erfolgt.

**10.** Verfahren nach einem der vorhergehenden Ansprüche, **dadurch gekennzeichnet, dass** aus der Einspritzrate als Funktion der Zeit eine Bestimmung des Einspritzbeginns, des Einspritzratenmaximums und/oder des Einspritzendes durchgeführt wird.

**11.** Vorrichtung zur Durchführung eines Verfahrens zur Bestimmung einer Einspritzrate eines Fluids nach zumindest einem der vorhergehenden Ansprüche, mit einem Injektor (2) zur Einspritzung eines Fluids in eine Kolben-Zylindereinheit mit einem darin verlagerbar angeordneten Kolben und mit Mitteln (16) zur Bestimmung der Einspritzrate aufgrund der Bewegung des Kolbens (10) in der Kolben-Zylinder-Einheit (3), wobei die Mittel (16) eine Korrektur der Einspritzrate auf Basis einer detektierten Schwingung des Kolbens (10) durchführen.

**Claims**

**1.** Method for determining an injection rate of a fluid which is injected by an injector (2), wherein the fluid (4) is injected by means of the injector (2) into a piston-cylinder unit (3) with a piston (10) which is arranged displaceably therein, and the injection rate is determined on the basis of the movement of the piston (10) in the piston-cylinder unit (3), wherein a correction of the injection rate is carried out on the basis of a detected oscillation of the piston (10).

**2.** Method according to Claim 1, **characterized in that** the correction with respect to the oscillation of the piston (10) is carried out on the basis of a mathematical model.

**3.** Method according to Claim 2, **characterized in that** the mathematical model takes into account damped oscillation with at least one damped oscillation frequency.

**4.** Method according to Claim 1, 2 or 3, **characterized**

**in that** the injection volume V can be determined on the basis of the determination of the injection rate, wherein the injection rate is equal to the derivation of the injection volume over time:

$$V(t) = h(t) * A_{piston}$$

where h(t) equals the piston stroke as a function of the time and $A_{piston}$ equals the cross-sectional area of the piston.

5. Method according to Claim 4, **characterized in that** the injection mass m(ρ,h) can be determined as a function of the density ρ of the injected fluid (4) and of the piston stroke h, where:

$$m(\rho,h) = \rho(T,p) * h * A_{piston}$$

where T equals the temperature and p equals the pressure in the piston-cylinder unit (3), h equals the piston stroke and $A_{piston}$ equals the cross-sectional area of the piston.

6. Method according to one of the preceding claims, **characterized in that** the movement of the piston (10) is divided into an oscillation movement and into a residual movement, wherein the oscillation movement is described by means of the mathematical model and the calculated movement data on the basis of the oscillation movement are subtracted from the movement data of the movement of the piston (10), in order to determine the movement data of the residual movement.

7. Method according to one of the preceding claims, **characterized in that** the injection rate is determined from the movement of the piston (10), and an injection rate portion of the oscillation movement and an injection rate portion of the residual movement are determined and apportioned, wherein the injection rate portion of the oscillation movement is described by means of the mathematical model, wherein the injection rate portion of the oscillation movement is subtracted from the injection rate data of the movement of the piston (10).

8. Method according to Claim 6 or 7, **characterized in that** the injection rate is determined from the movement data of the residual movement or from the injection rate portion of the residual movement.

9. Method according to one of the preceding Claims 6, 7 or 8, **characterized in that** the movement data of the residual movement or of the injection rate portion of the residual movement is determined in real time.

10. Method according to one of the preceding claims, **characterized in that** the start of injection, the maximum injection rate and/or the end of injection are determined from the injection rate as a function of time.

11. Device for carrying out a method for determining an injection rate of a fluid according to at least one of the preceding claims, having an injector (2) for injecting a fluid into a piston-cylinder unit with a piston which is arranged displaceably therein and with means (16) for determining the injection rate on the basis of the movement of the piston (10) in the piston-cylinder unit (3), wherein the means (16) carry out a correction of the injection rate on the basis of a detected oscillation of the piston (10).

**Revendications**

1. Procédé destiné à la détermination d'un taux d'injection d'un fluide qui est injecté par un injecteur (2), sachant que le fluide (4) est injecté, au moyen de l'injecteur (2), dans une unité de piston-cylindre (3) comprenant un piston (10) pouvant être agencé à l'intérieur de celle-ci, et le taux d'injection est déterminé du fait du mouvement du piston (10) dans l'unité de piston-cylindre (3), sachant qu'une correction du taux d'injection est effectuée en se basant sur une oscillation détectée du piston (10).

2. Procédé selon la revendication 1, **caractérisé en ce que** la correction par rapport à l'oscillation du piston (10) est effectuée en se basant sur un modèle mathématique.

3. Procédé selon la revendication 2, **caractérisé en ce que** le modèle mathématique tient compte d'une oscillation amortie avec au moins une fréquence d'oscillation amortie.

4. Procédé selon la revendication 1, 2 ou 3, **caractérisé en ce que** le volume d'injection V peut être déterminé en se basant sur la détermination du taux d'injection, sachant que le taux d'injection est égal à la dérivée temporelle du volume d'injection :

$$V(t) = h(t) * A_{piston}$$

h(t) étant la course du piston en tant que fonction de la durée et $A_{piston}$ l'aire de la section du piston.

5. Procédé selon la revendication 4, **caractérisé en ce que** la masse d'injection m(p,h) peut être déterminée en tant que fonction de la densité p du fluide injecté (4) et de la course du piston h par :

$$m(p,h) = p(T,p) * h * A_{piston}$$

dans laquelle T est la température et p la pression dans l'unité de piston-cylindre (3), h la course du piston et $A_{piston}$ l'aire de la section du piston.

6. Procédé selon l'une des revendications précédentes, **caractérisé en ce que** le mouvement du piston (10) est réparti en un mouvement d'oscillation et en un mouvement résiduel, sachant que le mouvement d'oscillation est décrit au moyen du modèle mathématique et les données de mouvement calculées du fait du mouvement d'oscillation sont soustraites des données de mouvement du mouvement du piston (10) pour déterminer les données du mouvement résiduel.

7. Procédé selon l'une des revendications précédentes, **caractérisé en ce que** le taux d'injection est déterminé par le mouvement du piston (10) et une part de taux d'injection du mouvement d'oscillation et une part de taux d'injection du mouvement résiduel sont déterminées et réparties, sachant que la part de taux d'injection du mouvement d'oscillation est décrite au moyen du modèle mathématique, sachant que la part de taux d'injection du mouvement d'oscillation est soustraite des données de taux d'injection du mouvement du piston (10).

8. Procédé selon la revendication 6 ou 7, **caractérisé en ce que** le taux d'injection est déterminé à partir des données de mouvement du mouvement résiduel ou de la part de taux d'injection du mouvement résiduel.

9. Procédé selon l'une des revendications précédentes 6, 7 ou 8, **caractérisé en ce que** la détermination des données de mouvement du mouvement résiduel ou de la part de taux d'injection du mouvement résiduel a lieu en temps réel.

10. Procédé selon l'une des revendications précédentes, **caractérisé en ce qu'**à partir du taux d'injection en tant que fonction de la durée, une détermination du début d'injection, du taux d'injection maximal et/ou de la fin d'injection est/sont effectuée(s).

11. Dispositif pour exécuter un procédé de détermination d'un taux d'injection d'un fluide selon au moins l'une des revendications précédentes, comprenant un injecteur (2) pour injecter un fluide dans une unité de piston-cylindre comprenant un piston pouvant être agencé à l'intérieur de celle-ci, et des moyens (16) de détermination du taux d'injection du fait du mouvement du piston (10) dans l'unité de piston-cylindre (3), sachant que les moyens (16) effectuent une correction du taux d'injection en se basant sur une oscillation détectée du piston (10).

# Fig. 1

# Fig. 2

# Fig. 3

**Fig. 4**

40

41

42

43

44

45